# EUROPEAN PATENT SPECIFICATION

(11) **EP 0 571 352 B1**
(45) Date of publication and mention of the grant of the patent: **01.10.1997**
(21) Application number: 93850111.1
(22) Date of filing: 19.05.1993
(51) Int. Cl.: B23C 3/00, B23C 3/12, B23C 5/00

(54) **Method of machining composites**
Verfahren zum Bearbeiten von Verbundwerkstoffen
Méthode pour l'usinage de matériaux composites

(30) Priority: 15.09.1992 SE 9202658
(43) Date of publication of application: 24.11.1993
(60) Divisional application: 95102817.4
(73) Proprietor: SANDVIK AKTIEBOLAG, 811 81 Sandviken (SE)
(72) Inventor: Thelin, Anders, S-162 40 Vällingby (SE)
(74) Representative: Taquist, Lennart

(56) References cited:
- DE-A- 2 313 630
- DE-A- 3 314 049
- DE-A- 3 508 520
- PATENT ABSTRACTS OF JAPAN vol. 11, no. 250 (M-616)(2697) 14 August 1987

## Description

### Background of the invention

The present invention relates to a method of machining and shaping a through opening in a fiber-reinforced composite material.

International application WO 93/23200 (state of the art according to Art. 54(3) EPC) discloses a method of machining and shaping a through opening with damage-free edges in a fiber-reinforced composite material with high precision by placing a rotationally symmetrical grinding body in a preformed hole with the composite material being oriented in such a way that the axis of rotation of the grinding body is essentially perpendicular to the longitudinal direction of the fibers at the edge of the opening. The opening is machined and shaped by the grinding body partly rotating around its own axis, partly performing a revolving motion relatively to the edge of the opening. Grinding, however, is a slow process with several limitations to its effective commercial use in such a method.

### Objects and summary of the invention

It is an object of this invention to avoid or alleviate the problems of the prior art.

It is further an object of this invention to provide an improved method of machining and shaping a through opening in a fiber-reinforced composite material.

The present invention provides a method of machining and shaping a through opening in a fiber-reinforced composite material starting from a preformed hole comprising placing at least one rotationally symmetrical milling body with substantially smaller diameter than that of the preformed hole in said hole and machining and shaping the desired opening with the milling body partly rotating around its own axis and partly by performing a translational movement relative to the edge of the opening, the fiber-reinforced material in the composite being oriented so that the axis of rotation of the milling body is essentially perpendicular to the longitudinal direction of the fibers at the edge of the opening, the size and/or geometry of the finished opening differing significantly from that of the preformed hole, the radial spread of the damages and/or defects arising from the preforming of said hole defining a lower limit for the amount of material removed, whereby the rotation symmetrical tool body is a milling cutter body provided with cutting edges being helically arranged in the longitudinal direction of said milling cutter body.

### BRIEF DESCRIPTION OF THE DRAWINGS

The invention is described closer in the following under reference to the accompanying drawings in which one embodiment is shown by way of example. This embodiment can however be modified within the scope of the claims.

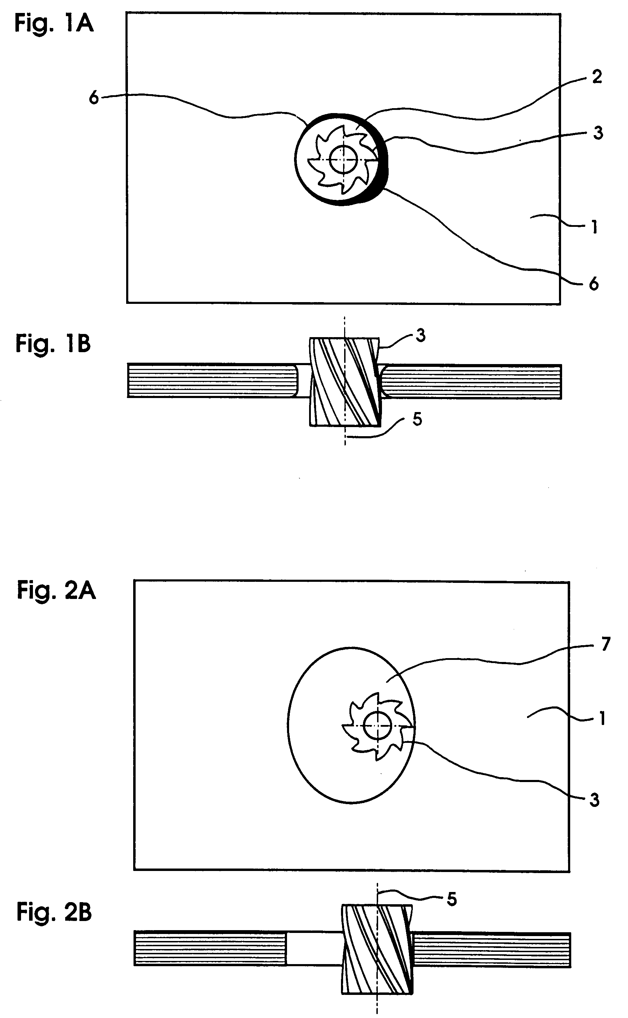

FIGS. 1A, 1B, 2A and 2B illustrate how a through opening is shaped in a fiber-reinforced composite plate using a rotationally symmetrical milling cutter body according to the present invention.

In FIGS. 1A, 1B, 2A and 2B, 1 is the fiber-reinforced laminate, 2 is the preformed hole, 3 is the milling body, 5 is the axis of rotation of the milling body, and 6 is the damages and/or defects. In FIG. 2A, 7 is the finished opening.

FIG. 3 shows a side view of a milling cutter provided with inserts useful in the present invention.

FIG. 4 shows a top view of the mill in FIG. 3.

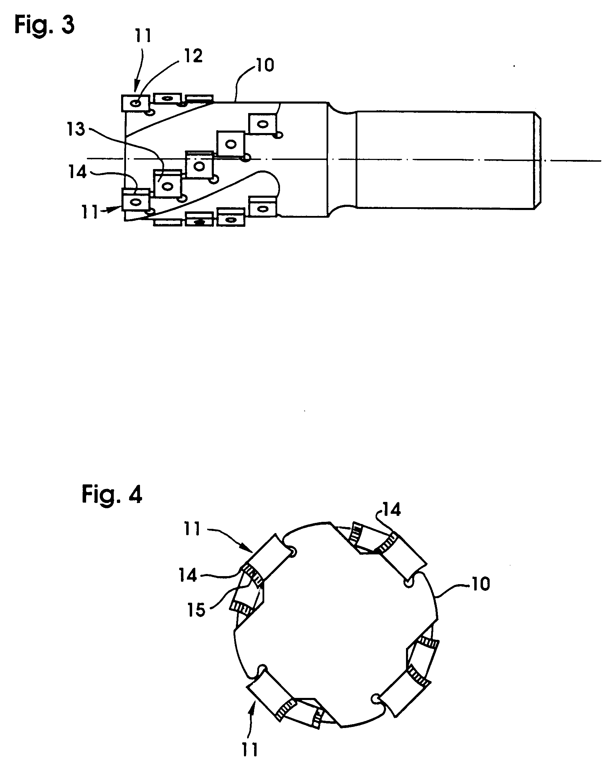

In FIGS. 3 and 4, 10 is the milling body, 11 is an insert, 12 is the central hole in an insert 11, 13 is the side surface of an insert 11, 14 is the clearance face of an insert 11, and 15 is the edge surface of an insert 11.

### DETAILED DESCRIPTION OF THE PREFERRED EMBODIMENTS OF THE INVENTION

It has now turned out that by using a milling body rather than a grinding tool, a significantly higher rate of cutting, less heat generation as well as better machining economy can be obtained.

According to the present invention, there is now provided an improved method of machining and shaping a through opening in a fiber-reinforced composite material. The method is described for the case as shown in FIGS. 1A, 1B, 2A and 2B where the material is present in form of a plane plate 1, a laminate composed of a number of lamellas containing continuous fiber reinforcements, whereby the lamellas are piled on top of each other. The fibers lie oriented in planes parallel to the plane of the laminate, whereby the fiber directions are 0°, 90°, 45° and -45°. An opening 2 in the laminate is shaped first by, for example, drilling. Damages and/or other defects 6 frequently arise at the edge of the opening. In the preformed hole 2, a rotationally symmetrical milling body 3 is placed. The laminate is oriented in such a way that the axis of rotation of the milling body 5 is perpendicular to the longitudinal direction of the fibers in the plate 1, i.e., perpendicular to the plane of the laminate. The opening 2 is machined by the milling body 3 partly rotating around its own axis 5 and partly by performing a translational movement relative to the edge of the opening 2 so that the damage and other defects 6 resulting from the shaping of the opening 2 are removed. The size and/or form of the finished opening 7 differs substantially from that of the preformed hole 2. While the finished opening can have any desired shape and size, machining with the milling body is conducted to at least remove the damage or other defects 6.

The milling body is suitably a so called milling cutter in high speed steel, solid cemented carbide or with brazed or indexable inserts of cemented carbide, titanium-based carbonitride alloy (so-called cermet) or ceramics. Such inserts are well-known in the art and inserts of these types can be used. The milling cutter (if high speed steel or cemented carbide) or the inserts are preferably coated with at least one thin layer of wear resistant material such as TiC, TiN and/or Al₂O₃ applied by the known CVD- and PVD-methods as known in the art. A thin layer of diamond is a particularly suitable coating. The total thickness of the coated layer is 20 µm, preferably 2-10 µm.

Alternatively, the milling cutter contains one or more diamond bodies or said inserts are diamond impregnated.

Particularly appropriate for use in the process of the present invention is the so-called drilling mill whereby the whole operation can be performed with only one tool.

For making larger openings, a milling cutter with the design shown in Figs. 3 and 4 is particularly suitable. This milling cutter is a milling body 10 equipped with removable inserts 11. The inserts 11 can be provided with a central hole 12 through the insert, wherein a threaded locking pin (not shown) is inserted to clamp the insert 11. When machining, the milling cutter rotates counterclockwise in Fig. 4 whereby the side surface 13 of the insert 11 forms the clearance face of the cutting edge 14 and the edge surface 15 forms the edge of the insert chip face. A number of inserts 11 in the shown embodiment are arranged in a spiral path in the longitudinal direction of the milling body 10. Four such spiral paths are uniformly distributed around the circumference of the milling body 10.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art within the scope of the claims.

## Claims

1. Method of machining and shaping a through opening in a fibre reinforced composite material (1) starting from a preformed hole (2) by using a rotation symmetrical tool body (3) with substantially smaller diameter than that of the preformed hole (2) placed therein and the opening (2) is machined and shaped by said body (3) partly rotating around its own axis (5), partly performing a translational movement relative to the edge of the opening, whereby the fibre reinforced material (1) is oriented so that the axis of rotation of said body (5) is essentially perpendicular to the longitudinal direction of the fibres at the edge of the opening (2), the size and/or geometry of the finished opening differing significantly from that of the preformed hole, whereby the radial spread of the damages and/or defects (6) arising from the preforming of said hole (2) defines a lower limit for the amount of material removed, whereby the rotation symmetrical tool body is a milling cutter body provided with cutting edges being helically arranged in the longitudinal direction of said milling cutter body.

2. Method according to claim 1 **characterized** in that the milling body (3) is equipped with inserts (11) of cemented carbide.

3. Method according to any of claims 1 or 2 **characterized** in that the milling body (3) is equipped with inserts (11) of ceramics.

4. Method according to any of the preceding claims **characterized** in that the inserts (11) are coated with at least one thin layer of wear resistant material.

5. Method according to the preceding claim **characterized** in that the inserts are coated with at least one thin layer of diamond.

6. Method according to claim 2 **characterized** in that the inserts are designed as indexable inserts (11).

## Patentansprüche

1. Verfahren zur Bearbeitung und Formung einer Durchgangsöffnung in einem faserverstärkten Verbundwerkstoff (1) ausgehend von einem vorgeformten Loch (2), indem man einen darin angeordneten rotationssymmetrischen Werkzeugkörper (3) mit wesentlich kleinerem Durchmesser als jener des vorgeformten Loches (2) verwendet und die Öffnung (2) durch diesen Körper (3) bearbeitet und formt, der teils um seine eigene Achse (5) rotiert und teils eine Translationsbewegung in Bezug auf die Kante der Öffnung durchführt, wobei das faserverstärkte Material (1) derart ausgerichtet ist, daß die Rotationsachse des Körpers (5) im wesentlichen senkrecht zu der Längsrichtung der Fasern an der Kante der Öffnung (2) ist und die Größe und/oder Geometrie der fertigen Öffnung sich wesentlich von denen des vorgeformten Loches unterscheiden, wodurch die radiale Ausdehnung der Verletzungen und/oder Fehler (6), die aus der Vorformung des Loches (2) stammen, eine untere Grenze für die Menge von entferntem Material definiert, wobei der rotationssymmetrische Werkzeugkörper ein Fräswerkzeugkörper ist, der mit Schneidkanten versehen ist, welche in Längsrichtung des Fräswerkzeugkörpers spiralförmig angeordnet sind.

2. Verfahren nach Anspruch 1, dadurch gekennzeichnet, daß der Fräswerkzeugkörper (3) mit Einsätzen (11) aus Sinterkarbid ausgestattet ist.

3. Verfahren nach einem der Ansprüche 1 oder 2, dadurch gekennzeichnet, daß der Fräswerkzeugkörper (3) mit Einsätzen (11) aus Keramik ausgestattet ist.

4. Verfahren nach einem der vorausgehenden Ansprüche, dadurch gekennzeichnet, daß die Einsätze (11) mit wenigstens einer dünnen Schicht von verschleißbeständigem Material überzogen sind.

5. Verfahren nach dem vorausgehenden Anspruch, dadurch gekennzeichnet, daß die Einsätze mit wenigstens einer dünnen Diamantenschicht überzogen sind.

6. Verfahren nach Anspruch 2, dadurch gekennzeichnet, daß die Einsätze als Wendeschneidplatten (11) gestaltet sind.

## Revendications

1. Méthode d'usinage et de façonnage d'ouvertures pratiquées dans les matériaux (1) composites renforcés avec des fibres à partir d'un trou préformé (2), qui utilise un corps d'outil à symétrie cylindrique (3), possédant un diamètre nettement plus petit que celui du trou préformé (2), que l'on place dans ce trou, et où l'ouverture (2) est usinée et façonnée par ledit corps (3), qui d'une part tourne autour de son propre axe (5) et d'autre part tourne autour du bord de l'ouverture, et où le matériau (1) renforcé avec des fibres est orienté de telle sorte que l'axe de rotation du dit corps (5) soit pratiquement perpendiculaire à la direction longitudinale des fibres sur les bords de l'ouverture (2), la taille et/ou la forme de l'ouverture après finition étant nettement différentes de celles du trou préformé, et la taille radiale des débris et/ou défauts (6) causés par le préformage du dit trou (2) définissant une limite inférieure de la quantité de matériau enlevée, et où le corps d'outil à symétrie cylindrique est un corps de fraise muni de bords coupants agencés de façon hélicoïdale dans la direction longitudinale du dit corps de fraise.

2. Méthode selon la revendication 1, caractérisée en ce que le corps de fraise (3) est muni de plaquettes (11) en carbure cémenté.

3. Méthode selon l'une quelconque des revendications 1 ou 2, caractérisée en ce que le corps de fraise (3) est muni de plaquettes (11) en céramique.

4. Méthode selon l'une quelconque des revendications précédentes, caractérisée en ce que les plaquettes (11) sont recouvertes d'au moins une couche fine de matériau résistant à l'usure.

5. Méthode selon la revendication précédente, caractérisée en ce que les plaquettes sont recouvertes d'au moins une couche fine de diamant.

6. Méthode selon la revendication 2, caractérisée en ce que les plaquettes sont conçues pour être des plaquettes amovibles (11).
